# EUROPEAN PATENT APPLICATION

(11) **EP 3 502 651 A1**
(43) Date of publication of application: **26.06.2019**
(21) Application number: 18213928.7
(22) Date of filing: 19.12.2018
(51) Int. Cl.: G01N 1/28

(54) **APPARATUS AND METHODS FOR TRANSFERRING A TISSUE SECTION**

(30) Priority: 22.12.2017 US 201762609625 P
(71) Applicant: Agilent Technologies, Inc., Santa Clara, CA 95051 (US)
(72) Inventor: LIM, Victor, Santa Clara, CA California 95051 (US); WORKMAN, Richard, Santa Clara, CA California 95051 (US); SAMPAS, Nicholas, Santa Clara, CA California 95051 (US)
(74) Representative: Grünecker Patent- und Rechtsanwälte PartG mbB

(57) **Abstract**

This invention relates to apparatus and methods for transferring a tissue section to a slide. The invention also relates to automated systems and methods for transferring a tissue section onto a slide using a bath at ambient temperature and for smoothly mounting a tissue section on a slide.

## Description

### CROSS-REFERENCE TO RELATED APPLICATIONS

None.

### FIELD OF THE INVENTION

This invention relates to apparatus and methods for transferring a tissue section to a slide. The invention also relates to automated systems and methods for transferring a tissue section onto a slide.

### BACKGROUND OF THE INVENTION

Microtomes are used to cut extremely thin slices of tissue, known as tissue sections, for microscopic observation under transmitted light or electron radiation. Microtomes use extremely sharp knives to slice thin tissue sections of a desired thickness from a sample, typically tissue embedded in paraffin or another medium. The knife is held by a knife holder which can be adjusted to cut at a selected thickness. The tissue sections can then be retrieved from the microtome, usually by manual retrieval, such as by an operator using a grasping tool, smoothed on water, transferred to a slide, and examined with an optical or an electron microscope or by other techniques. Because the tissue sections are extremely thin, with some several micron thickness, they may be difficult to collect and transfer without damage or contamination.

A rotary microtome comprises a handwheel that moves a sample holder downward, so that the held sample is sliced by the knife. The slicing is often a manual operation, with each section being sliced via rotation of the handwheel, and the transfer of the sliced tissue section from the microtome to a slide is often performed manually as well. Lim et al. US 20170284904 discloses an apparatus and methods for automated tissue sectioning, including slicing and transferring a tissue section from a microtome. It also relates to automated systems and methods for slicing and transferring a tissue section onto a slide.

A traditional approach for slicing tissue sections using a microtome involves creating a strip or ribbon of tissue sections from a tissue sample (such as a tissue embedded in paraffin). After a tissue section is created, the trailing edge of the section adheres to the knife, which allows an attachment point between the sliced tissue section and a subsequently sliced section, and so on, thereby creating a ribbon of tissue sections. The ribbon of tissue sections is traditionally placed in a tissue section floatation bath before being transferred to a slide.

To facilitate placement of a tissue section on a slide, the section is traditionally floated on a warm water bath, usually held at around 40°C. This helps relax the wrinkles that can form during the slicing process. It also allows a transfer medium for the section to be placed onto a slide. Tissue section flotation baths are commercially available from several vendors, such as Cardinal Health and Polysciences, Inc. Tissue sections are usually left in a floatation bath until wrinkles in the tissue and the surrounding paraffin have smoothed away. When the wrinkles have dissipated, a slide can be used to draw the section out of the bath.

A problem with this approach is that the paraffin and the different tissue types within a tissue sample will all relax at different rates. If the rates at which they relax are very different certain parts of the tissue sample will begin to overstretch. Another problem is that this approach has traditionally been performed manually and required significant time, effort, and skill on the part of laboratory personnel.

Orfield et al. US 20150168275 discusses the need for an improved system for mounting a tissue section on a slide: It is commonly desirable in biological laboratories to mount tissue sections to slides for purposes of examining the tissue sections using a microscope, treating the tissue sections with a stain or dye, and for other purposes. Conventional systems and methods for mounting specimens onto slides comprise placing tissue sections in a sufficiently deep water bath, with the specimens floating on the surface of the water. The narrow side of a slide is then rested on the rim of the water bath and the slide is angled down into the water back such that the slide is partially submersed in the water. Subsequently, a small brush or glass capillary tube is used to manipulate a tissue section onto the slide. Typically, the slide is gradually drawn out of the water as additional tissue sections are arranged on the slide. In another variation of a conventional method, tissue is embedded in paraffin wax, sliced with a microtome, and then selected sections of the embedded tissue are transferred to a heated water bath. The hot water bath partially melts the paraffin about the specimens, and a glass slide treated with adherents is then used to scoop the tissue sections out of the hot water bath. Conventional methods of mounting specimens on slides are thus difficult, time-consuming, and labor-intensive.

Orfield also discusses a system and method for mounting a section onto a substrate. The system comprises a fluid channel including: a fluid channel inlet that receives the section, processed from a bulk embedded sample by a sample sectioning module positioned proximal the fluid channel inlet, a section-mounting region downstream of the fluid channel inlet, and a fluid channel outlet downstream of the section-mounting region; a reservoir in fluid communication with the fluid channel outlet; and a manifold, fluidly coupled to the reservoir, that delivers fluid from the reservoir to the fluid channel inlet, thereby transmitting fluid flow that drives delivery of the section from the fluid channel inlet toward the section-mounting region.

Angros US 20140287456 discusses a method of removing a floatation liquid from between a microscope slide and a paraffin embedded biological specimen. The microscope slide with the paraffin embedded biological specimen floated thereon is positioned onto a slide support element. The slide support element is rotated to cause the microscope slide and the paraffin embedded biological specimen to move in a way that causes the floatation liquid disposed between the microscope slide and the paraffin embedded biological specimen to be removed from between the microscope slide and the paraffin embedded biological specimen.

Apparatus and methods for automated collection and transfer of a tissue section from a microtome to a slide are desired to increase efficiency and quality of tissue sections.

### BRIEF DESCRIPTION OF THE DRAWINGS

Figure 1 is a view of a tissue section being transferred to a slide.
Figure 2 is a view of a reflective infrared heat source for transferring a tissue section onto a slide.
Figure 3 is a perspective view of an apparatus for tissue section collection and transfer.
Figures 4A through 4E are photographs of a tissue section at five time points as it is being transferred onto a slide according to the present apparatus and method.
Figure 5 is a photograph of a tissue section mounted smoothly on a slide according to the present apparatus and method.

### DETAILED DESCRIPTION OF THE INVENTION

As one aspect, a method is provided for collecting and transferring a tissue section to a slide. The method comprises introducing a tissue section to a bath, such as by floating the tissue section on a surface of the bath. The method also comprises applying a line of heat (such as a line of infrared radiation) to the tissue section while withdrawing from the bath. The line of heat can be applied at or near an interface between air and liquid, where the tissue section crosses the interface.

As another aspect, automated methods are provided for slicing a tissue section from a sample. The automated method comprises slicing a tissue section from a tissue sample; adhering the tissue section to an adhesive material; attaching the adhesive material to a slide so that a first portion of the tissue section is adhered to the slide and a second portion of the tissue section is not adhered to the slide; introducing the slide and the tissue section to a bath; floating the second portion of the tissue section in the bath; and withdrawing the slide and the adhered tissue section from the bath so as to spread the adhered tissue section on the slide. In some embodiments, the automated method further comprises applying heat to the tissue section while withdrawing from the bath.

As another aspect, an apparatus is provided for transferring a tissue section onto a slide. The apparatus comprises a slide holder adapted for holding and moving a slide. The apparatus also comprises a bath container within range of movement of the slide holder, wherein the slide holder is adapted for introducing a tissue section adhered to the slide to a bath in the bath container. The apparatus also comprises a heat source configured and positioned with respect to the slide holder and bath container to provide heat on the tissue section as it is withdrawn from the bath.

### Definitions

A heat source can be any structure or mechanism that provides heat. In some embodiments, the heat source is configured to provide a line of heat near a surface of the tissue bath. A line of heat is an area that is greater in one dimension than the other. For example, a line may have a width that is at least 2x greater than its height, alternatively at least 3x, 5x, 10x, 50x, 100x, 500x, or 1000x greater.

A tissue section is an extremely thin slice of a tissue which may be suitable for microscopic examination, for example, from about 1 to about 100 microns, alternatively from about 1 to about 30 microns, alternatively from about 3 to about 10 microns. A tissue section can comprise a tissue in an embedding medium such as paraffin. A tissue section can have one or more portions. In the context of exiting a bath, the tissue section may have a leading portion and a trailing portion, where the leading portion exits the bath before the trailing portion. A tissue section can have any shape (square, rectangular, circular, oval, or a less-defined shape). Oftentimes, a tissue section is generally rectangular in shape, and in those cases, the leading portion can be a leading side, and the trailing portion can be a trailing side.

### Transferring A Tissue Section To A Slide

The present apparatus and methods use a tissue section floatation bath for transfer for a tissue section to a slide. However, they differ from conventional techniques in how and where heat is transferred to the tissue section to allow the tissue and paraffin or other embedding medium to smooth out. The present methods and apparatus avoid the need or use of a heated floatation bath. The conventional approach uses the bath itself as the source of heat that is transferred to the tissue section. By heating only a small region of the tissue section, the present apparatus and methods allow the water bath to operate at a lower temperature, for example at ambient temperature, than the higher temperatures conventionally used for tissue smoothing (such as 40°C or higher). An important aspect of the present apparatus and methods is that heat is applied directly to the tissue section over a small area of the tissue section as the slide and tissue section are drawn out of the slide bath. Thus, in some embodiments, the present methods and apparatus employ a bath at a temperature less than 40°C, alternatively from about 18°C to about 30°C, alternatively at ambient temperature.

In some embodiments, a portion of the tissue section is attached to the slide by an adhesive material, such as an adhesive strip. The tissue section can be attached to a slide (by an adhesive material, by a clip, or by other means) before entering the slide bath. In some embodiments, a leading portion of the tissue section is attached to a slide (before, during, or after the tissue section is placed in the bath). A trailing portion of the tissue section floats on a surface of the bath. In some embodiments, the portion attached to the slide is an edge of the tissue section, and substantially all of the tissue section (or at least 90% of the tissue section) floats on the bath surface. The trailing portion can be spread onto the slide as the leading portion is withdrawn from the tissue bath. Preferably the tissue section is spread smoothly on the slide and/or the spread tissue section has no visible wrinkles.

A leading portion of the tissue section can be withdrawn from the bath at a suitable speed or angle, which may be set or adjusted based on visual inspection, or at a predetermined rate or angle. In some embodiments, a user observes the tissue section, or the tissue and/or embedding medium, in the area where heat is applied. The observation can be visual, with the unaided eye or with a magnifier. Based on her own visual observations, a user may adjust a rate and/or angle of withdrawing the tissue section ensure that part of the tissue section is smoothed. For example, the withdrawing can be slowed down if the visual observation indicates the rate of withdrawing is too rapid. In some embodiments, automated monitoring and control is included to ensure the section is smoothed. An imager such as a camera can be configured to monitor the tissue section in the smoothed area, and based on that monitoring, the rate and/or angle of withdrawing the section can be adjusted in an automated manner (such as via a controller in signal communication with the imager and the slide holder). In some embodiments, the tissue section is withdrawn at a predetermined rate, for example, a rate about 1 mm per second or slower. In some embodiments, the slide enters and/or exits the slide bath at an angle between 10° and 100°, alternatively between 45° and 90°, alternatively between 60° and 90°, with a surface of liquid held in the slide bath.

In some embodiments, embedded tissue sections (such as tissues embedded in paraffin) can be mounted on a slide by heating a region near the interface between water and the slide by means of localized illumination with infrared radiation. Infrared heat produced by a linear heater element can be directed or focused to the sample by means of a reflector.

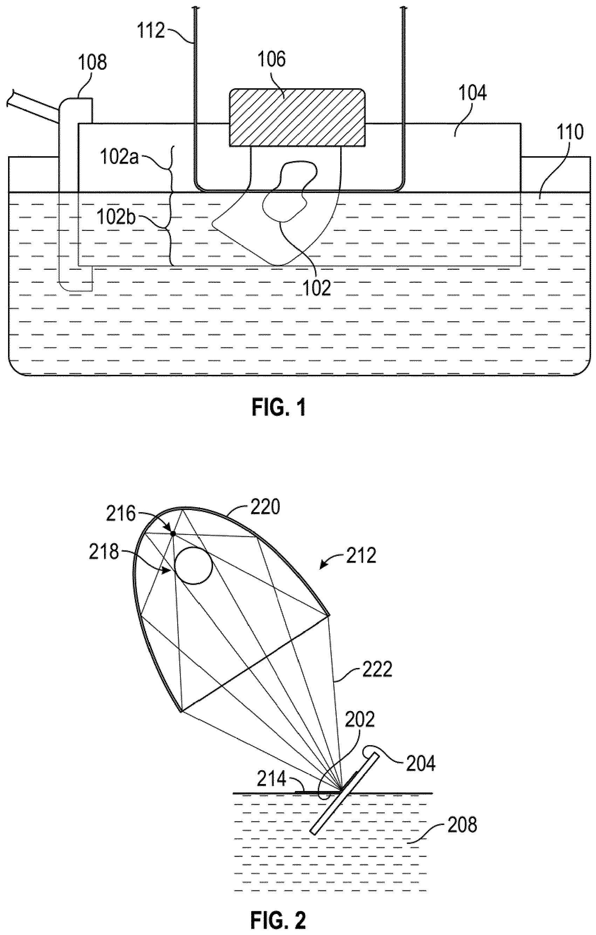

Fig. 1 is a view of a tissue section 102 adhered on one edge to a microscope slide 104 by an adhesive strip 106. The slide 104 is held by a slide holder 108 in a bath 110. A resistive heat source 112 (which is a nichrome wire in this embodiment) is configured and positioned to provide a line of heat on the tissue section 102 as it is withdrawn from the bath 110. Fig. 1 shows that a first portion 102a of the tissue section 102 is flat on the slide 104 while a second portion 102b of the tissue section 102 floats on the surface of the liquid in the bath 110. The slide bath 110 will usually be water, preferably deionized water, though other liquid solutions or mixtures can be used. The line of heat is applied to the tissue section at or near the air/liquid interface of the bath. For example, the line of heat can be applied within 2 mm of the bath surface, alternatively at about 1 mm or less above the bath surface.

In the embodiment shown in Fig. 1, a top portion of the tissue section 102 is attached to the slide by the adhesive strip 106 before entering the slide bath. This top portion is also a leading portion of the tissue section as it exits the bath. A trailing portion 102b of the tissue section floats on a surface of the bath. The trailing portion is spread or mounted onto the slide as the leading portion is withdrawn from the tissue bath. The tissue section 102 is spread smoothly on the slide and/or the spread tissue section has no visible wrinkles.

In some embodiments of the present methods and apparatus, the slide holder 108 may be automated. The slide holder 108 may be configured for rotational and/or linear motion so that the slide holder can transport the slide 108 to a slide bath 110. The slide holder can be configured for motion to introduce and withdraw a held slide in a slide bath at a desired or predetermined angle with respect to the air/liquid interface and/or at a desired or predetermined speed. The slide holder can be configured to partially or completely submerge the held slide in the slide bath.

### Heat Source for the Tissue Section Transfer Apparatus

In some embodiments of the present apparatus and methods, a heat source is adapted to provide a line of heat on the tissue section at or near an interface of the slide and the bath. The heat source can be a resistive heat source (such as a filament), a Peltier heat source, an air-based heat source, a light radiation source (for example, an infrared laser), or other embodiments known to one skilled in the art. In some embodiments, the heat source comprises a resistive heat source. For example, the heat source may include a nichrome wire, a straight wire filament, a coiled filament, a quartz heater, an array of LEDs, or any other linear source of infrared radiation. In some embodiments, the heat source comprises a light radiation source, for example, an infrared laser. In some embodiments, the heat source further comprises a reflector (such as a mirror) positioned to reflect radiation from the light radiation source as a line of heat on the tissue section on the slide holder. Suitable reflectors include a spherical mirror, a parabolic mirror or an elliptical mirror. In some embodiments, the heat source further comprises an absorber positioned to absorb direct radiation and prevent direct radiation from reaching the tissue section.

Fig. 2 shows an embodiment of a heat source for use in the present methods and apparatus. A tissue section 202 is in a bath 208. A first portion is flat on a slide 204 and a second portion floats on the surface of the bath, or at the air/water interface 214. A heat source 212 is configured and position to provide a line of heat on the tissue section as it is withdrawn from the bath 208. In the embodiment shown in Fig. 2, the heat source 212 comprises a filament 216, an absorber 218, and a reflector 220. The heat source 212 provides infrared light radiation 222 to the tissue section 202. The radiation 222 emitted from the linear heat source is reflected by the reflector 220. In the embodiment shown in Fig. 2, the reflector 220 is an elliptical reflector, positioned straight in the direction normal to the plane of the ellipse. This geometry is desirable because the image of a thin linear source (such as hot filament) is a narrow linear region of infrared radiation. The width of the narrow region of radiation increases nonlinearly with the eccentricity of the ellipse, which is related to its aspect ratio. The magnification of the filament at any given point on an elliptical mirror is related to where if reflects off the mirror, relative to the focus of the ellipse, i.e. the closer the reflection is to the vertex the greater the magnification of the ray. More eccentric ellipses magnify more strongly. For spherical mirrors, the magnification is related to the ratio of the distances from the center of the mirror to each of the two foci. These relationships are known to those skilled in the art of optical design and can be used to design an efficient heater geometry. This infrared radiation from the source can be directed onto an embedding medium of the tissue section near the interface 214 of the slide, the water, and the air above the water bath. Radiation that directly illuminates the tissue in regions not close to the slide/water interface can soften or melt the tissue and/or embedding medium prematurely. For this reason, in some embodiments, a rod-shaped absorber 218 is positioned between the filament 216 and the opening of the elliptical heater to block light rays emanating from directly the filament and prevent them from impinging upon the tissue outside of the desired region. This geometry is shown in Fig. 2. In some embodiments, two additional planar mirrors are mounted on both ends of the elliptical mirror, perpendicular to the axis of the filament. These auxiliary mirrors increase the efficiency of heating by reflecting radiation that would otherwise be lost back toward the targeted region of focused radiation.

An absorber rod 218 can be used to absorb a high amount of direct heat which is potentially damaging to the tissue section. To that end, the absorber rod 218 can be coated with a black or heat-absorbing finish. As the absorber rod 218 is in close proximity to the filament 216, it will become hot, and to address this, the rod 218 may comprise an interior a tube configured to pass through a cooling fluid (such as a cooling liquid) to reduce the temperature. In other embodiments, the absorber rod 218 comprises a conductive metal, such as copper, that can efficiently remove heat from via the two opposite ends of a housing that supports the absorber rod 218.

Although the interior surface of a reflector 220 should be configured to reflect most of the heat, nevertheless, it too may become hot after prolonged usage. For this reason, it may be useful to pass a cooling fluid (such as a cooling liquid) over an exterior surface of the reflector, or inside the reflector, or it may be desirable to conductively cool the reflector 220 to remove the excess heat as well. In some embodiments, the heat absorbed by the mirrors or absorber bar can be conductively couple to a heat fin mounted on the back side of the mirror body or the two side mirrors. The elliptical reflector 220 may be composed of a metal or alloy that is machined and polished, or it can be a casting or 3D printed material used with a thin polished curved reflective layer or insert. For example, a #8 mirror-finish polished stainless steel mounted within a machined aluminum housing has been used.

The present apparatus can also comprise a controller configured to automate movement and/or operation of the slide holder. The same controller can automate operation of the heat source.

### Apparatus For Transferring A Tissue Section

The present apparatus and methods can be added to or combined with the apparatus and methods disclosed in Lim et al. US 20170284904. For example, a bath and/or heat source as described herein can be included with the microtome, the tissue collector, and/or the slide holder described in Lim et al.

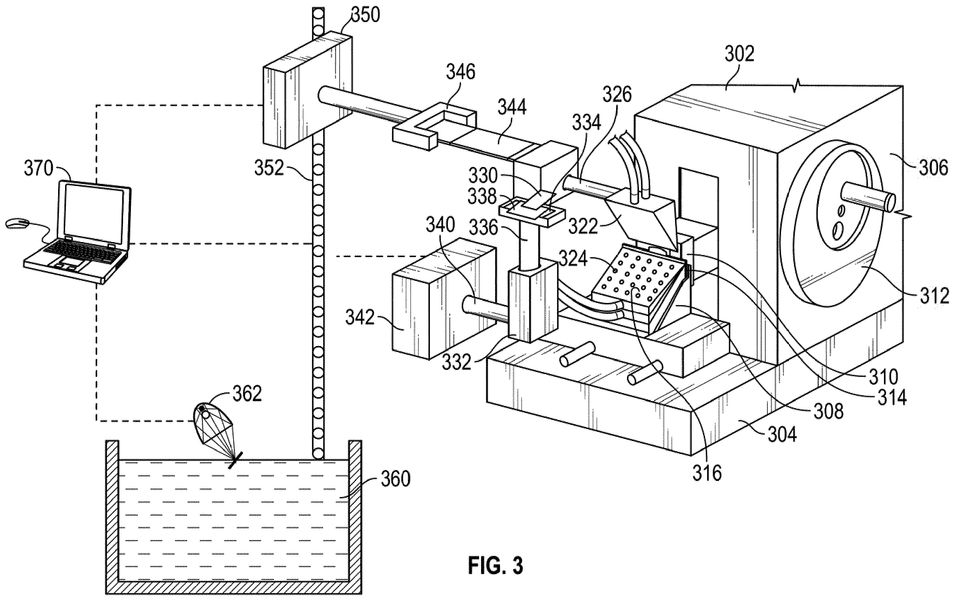

Fig. 3 is a perspective view of an apparatus for automated tissue section transfer. The apparatus includes an automated tissue collection system as described in Lim et al., as well as a system for mounting a tissue section on a slide as described herein. In Fig. 3, a tissue section has already been sliced by the knife of a microtome, and a tissue collector has collected the tissue section from the microtome. The tissue collector has an extendible arm 336 and an adhesive strip 338 attached to the arm, and the tissue collector has moved to a position where the tissue section 330 and the adhesive strip 338 are being attached to a slide and released from the tissue collector.

More particularly in Fig. 3, the apparatus includes a rotary microtome 302, which may be a previously existing design or a new design adapted for use with the apparatus and methods of the present disclosure. For example, the rotary microtome 302 may include a base 304 and a microtome housing 306 provided on the base 304. A knife holder 308 is located on the base 304. A sample holder 310 is moved up and down by means of a handwheel 312 provided on microtome housing 306. The knife holder 308 and the sample holder 310 are arranged oppositely from one another. The knife holder 308 supports a front plate 316 (also called a knife pressure plate) which applies pressure to the knife 314. The knife holder 308 is supported by various clamps, supports and rails 318. The sample holder 310 can be adjusted to select the thickness sliced from a tissue sample. It also allows adjustment of the angle at which the knife 314 contacts the tissue sample.

In some embodiments, the apparatus is operated as follows to slice a tissue section from a sample. With a tissue sample in the sample holder 310 and the knife holder 308 in the desired position, the operator turns the handwheel 312, lowering the sample holder 310 so the tissue sample engages the knife 314 which slices a tissue section of desired thickness. As the tissue section 330 is sliced, positive pressure gas from the gas supplier 322 and apertures 324 blows on the tissue section 330, thereby reducing or preventing deformation (such as curling or bunching) of the tissue section 330. Positive pressure gas can also be supplied to the front plate 316, where it passes through small apertures 324 on the front plate to provide a bed of gas on the front plate 316. The gas supplier 322 can be moved away via a shaft 326 which can be moved linearly and/or rotationally.

In some embodiments, the apparatus includes a tissue collector 332 adapted for collecting the tissue section 330 from the front plate 316 in an automated fashion. The tissue collector 332 can include one or more apertures 334 through which a reduced pressure (resulting in suction) is provided. A tissue section 330 and/or an adhesive material 338 can be held to the tissue collector 332 by the reduced pressure at the apertures 334. The tissue collector 332 may include an extendible portion such as an arm 336 which contacts or comes close to the tissue section 330.

In some embodiments, the tissue collector employs an adhesive material in place of or in addition to reduced pressure. For example, the tissue collector 332 may use an adhesive material 338 such as an adhesive strip, which is removably attached to the tissue collector or an extendible portion thereof by reduced pressure at apertures 334, by an adhesive, by both, and/or by other means. The adhesive material 338 contacts the tissue section 330 and adheres to it. In some embodiments, a first portion of the adhesive material attaches to the tissue section and a second portion of the adhesive material is on the tissue collector but does not attach to or contact the tissue section. In the embodiment shown in Fig. 3, the tissue collector 332 is adapted for rotational movement, as it is attached by a shaft 340 to a support 342. The support 342 may be operated manually or by automation, such as by a controller 370.

Controller 370 can be any suitable computing device, for example, a computer such as a personal computer. A controller may include one or more types of hardware, firmware and/or software, as well as one or more memories and databases, as needed for these purposes. Controller 370 can be in signal communication with other systems, devices, or components (as partially represented, for example, by dashed lines in Fig. 3). Two or more systems, devices, or components are in signal communication when they are capable of communicating with each other via signals that travel over some type of signal path. The signal paths may include physical, electrical, magnetic, electromagnetic, electrochemical, optical, wired, or wireless connections. The signal paths may also include additional systems, devices, or components.

In Fig. 3, the tissue collector 332 has been rotated, and an arm has been extended, so that the tissue section 330 and the adhesive material 338 are in motion toward contacting a slide 344 held by a slide holder 346. The tissue section 330 adheres to the bottom side of slide 344 itself, but the adhesive material 338 makes a stronger attachment to the slide 344 on the particular portion of the adhesive strip which is not attached to the tissue section. At this point, the reduced pressure holding the adhesive material 338 to the apertures 334 of the tissue collector can be halted, thereby releasing the adhesive material 338 from the tissue collector 332.

After the tissue section and adhesive strip have been transferred to the slide, the slide holder 346 can then move the slide 344 toward bath 360. The slide holder 346 can be rotated or otherwise moved along, or it can be attached to a slide holder base 350 that provides such movement. For example, slide holder base 350 can move along track 352 into proximity with bath 360. The slide holder 346 or the slide holder base 350 may be adapted to move so that it is in position to contact the bath 360. In some embodiments, the slide holder 346 or the slide holder base 350 is capable of rotational motion, so that the angle of the slide 344 can be changed. Optionally, the slide holder 346 or the slide holder base 350 is adapted for rotation to other positions where other functions or steps are performed.

The apparatus of Fig. 3 further comprises a heat source 362 of the type shown in more detail in Fig. 2. A controller 370 can be in signal communication to one or more of the slide holder base 350, the heat source 362, and the tissue collector 332.

After the tissue section is mounted on the slide smoothly, the adhesive strip can then be removed, resulting in a tissue section ready for conventional processing (deparaffination, stringency washing, cover slipping, staining, enzymatic treatment, etc.). The controller for the heat source can also be in signal communication with and configured to control other apparatus, such as the slide holder described below.

Thus, the present apparatus can also include means for slicing a tissue section from a sample, such as a microtome comprising a knife adapted to slice the tissue section from a sample. The apparatus can also include a tissue collector adapted for collecting the tissue section and for movement between the microtome and the slide holder. A collecting end of the tissue collector is adapted for holding an adhesive material, such as an adhesive strip. In some embodiments, the apparatus also further comprises an adhesive strip dispenser within range of movement of the collecting end of the tissue collector.

Through the use of the apparatus and method described herein, a tissue section may be transferred from a microtome to a slide without manual action on the tissue section, in an automated manner. A tissue section may be transferred without manual contact with the tissue section, such as by a user grasping the tissue section by hand or with a handheld instrument. More particularly, a freshly-sliced tissue section may be removed from a microtome without manual contact, and/or a tissue section may be placed on a slide without manual contact. The apparatus and methods also enable slicing and transferring of tissue sections having good two-dimensional stability, with bunching or curling, and avoid waste of tissue sections.

The present methods and apparatus can be employed to produce a tissue section smoothly mounted on a slide, such as a tissue section mounted with no wrinkles or essentially no wrinkles visible without a microscope, preferably with no wrinkles or essentially no wrinkles visible even with a microscope. The present methods and apparatus can be employed to produce a tissue section mounted on a slide wherein the tissue essentially matches its shape in the sample from which the tissue section was sliced. The present methods and apparatus can be employed to produce a tissue section mounted on a slide with essentially no deformation of the tissue or the embedding medium in comparison to the sample from which the tissue section was sliced.

The slide having a smoothly mounted tissue section may be removed or routed to storage, for further processing (such as staining), or for evaluation (e.g., microscopic viewing). An automated slide holder such as slide holder may move the slide to a water bath.

The present apparatus can also comprise a controller configured to automate movement and/or operation of the slide holder. The same controller can automate movement and/or operation of the heat source. The same controller can automate movement and/or operation of other devices associated with the tissue section or the slide, such as a microtome or a tissue collector.

### Example

An apparatus as illustrated in Fig. 2 was tested in a method for transferring a tissue section to a slide from a bath. The apparatus comprised an elliptical reflector having a ratio of major to minor axes of 2.4:1. The elliptical reflector used was approximately 70 mm long, 45 mm across, and 55 mm deep. In this example, approximately 8 Amperes of current were run through a nichrome filament that was 0.51 mm in diameter and about 90 mm long, operating at a temperature of about 1700°C.

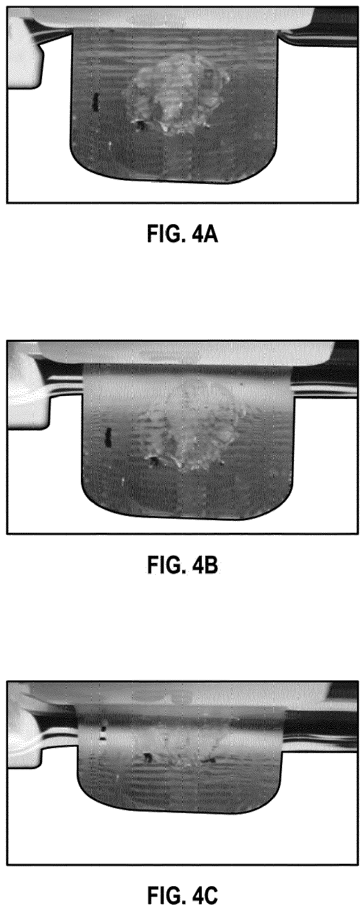

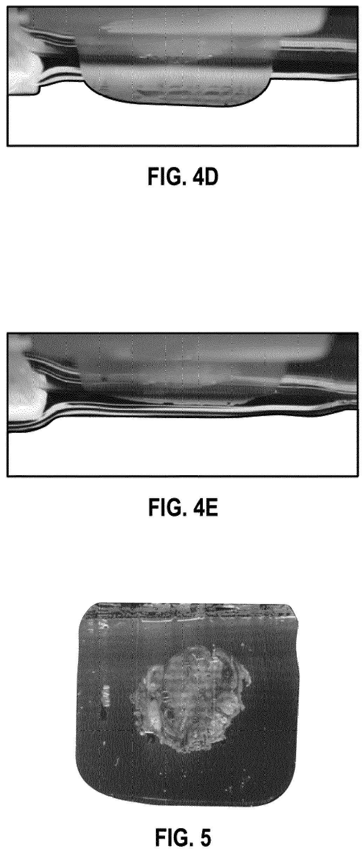

Shown in Fig. 4A, as viewed from directly above, is a paraffin embedded brain tissue section floating in a water bath just before mounting onto a glass slide. Figures 4A through 4E show that same tissue section at five time points as it is being transferred onto a slide by drawing the slide up from the water bath. In Fig. 4A, the filament was beginning to warm up, and wrinkles can be seen from top to bottom of the tissue section. In Fig. 4B, a top portion of the section has been warmed and has become smoothed. In each successive image from Fig. 4C to 4E, more of the tissue section has been smoothed and is mounted onto the slide. The duration of the mounting is approximately 60 seconds, with about 20 seconds to achieve sufficient warming to initiate the mounting. Fig. 5 shows the tissue section smoothly mounted on the slide at the end of this example.

The present apparatus and methods reduce the degree to which a tissue section changes shape in a slide bath (due to overstretching other changes), and allow the tissue section to maintain its original shape. This will improve the uniformity of section thicknesses for samples. For diagnoses which require judgment based on stain intensity, improved uniformity and maintaining shape are important since thinner sections, due to overstretching, will make stains appear to be lighter which may lead to improper diagnosis. These and other benefits are made available by the present disclosure.

### EXEMPLARY EMBODIMENTS

Exemplary embodiments provided in accordance with the presently disclosed subject matter include, but are not limited to, the following:
1. A method of collecting and transferring a tissue section sliced from a sample, the method comprising:
   introducing a tissue section to a bath, such as by floating the tissue section on a surface of the bath;
   applying a line of heat (such as a line of infrared radiation) to the tissue section while withdrawing from the slide bath, such as within 2 mm of the bath surface, for example, at about 1 mm or less above the bath surface.
2. The method of embodiment 1, wherein the bath is at a temperature of less than 40°C, alternatively from about 18°C to about 30°C, alternatively at ambient temperature.
3. The method of any of embodiments 1 or 2, wherein a portion of the tissue section is attached to the slide by an adhesive material, such as an adhesive strip.
4. The method of any of embodiments 1 to 3, wherein the tissue section is attached to a slide before entering the slide bath.
5. The method of any of embodiments 1 to 4, further comprising attaching a leading portion of the tissue section to a slide (before, during, or after the tissue section is placed in the bath), and floating a trailing portion of the tissue section on a surface of the bath. In some embodiments, the attached portion is an edge of the tissue section, and substantially all of the tissue section (or at least 90% of the tissue section) floats on the bath surface.
6. The method of embodiment 5, wherein the trailing portion is spread onto the slide as the leading portion is withdrawn from the tissue bath, preferably the tissue section is spread smoothly on the slide and/or the spread tissue section has no visible wrinkles.
7. The method of embodiment 5, wherein the leading portion is withdrawn from the tissue bath at a predetermined rate, for example, a rate about 1 mm per second or slower.
8. The method of any of embodiments 1 to 7, wherein the slide enters and/or exits the slide bath at an angle between 10° and 100°, alternatively between 45° and 90°, alternatively between 60° and 90°, with a surface of liquid held in the slide bath.
9. An automated method for slicing a tissue section from a sample, comprising:
   slicing a tissue section from a tissue sample;
   adhering the tissue section to an adhesive material;
   attaching the adhesive material to a slide so that a first portion of the tissue section is adhered to the slide and a second portion of the tissue section is not adhered to the slide;
   introducing the slide and the tissue section to a bath;
   floating the second portion of the tissue section in the bath; and
   withdrawing the slide and the adhered tissue section from the bath so as to spread the adhered tissue section on the slide.
10. The method of embodiment 9, wherein the bath is at a temperature less than 40°C, alternatively from about 18°C to about 30°C, alternatively at ambient temperature.
11. The method of any of embodiments 9 or 10, further comprising applying heat to the tissue section while withdrawing from the bath.
12. An apparatus for transferring a tissue section onto a slide, comprising:
   a slide holder adapted for holding and moving a slide;
   a bath container within range of movement of the slide holder, wherein the slide holder is adapted for introducing a tissue section adhered to the slide to a bath in the bath container;
   a heat source configured and positioned with respect to the slide holder and bath container to provide heat on the tissue section as it is withdrawn from the bath.
13. The apparatus of embodiment 12, wherein the heat source is adapted to provide a line of heat on the tissue section at or near an interface of the slide and the bath.
14. The apparatus of any of embodiments 12 or 13, wherein the heat source comprises a resistive heat source, for example, a nichrome wire.
15. The apparatus of any of embodiments 12 to 14, wherein the heat source comprises a light radiation source, for example, an infrared laser.
16. The apparatus of embodiment 15, wherein the heat source further comprises a reflector positioned to reflect radiation from the light radiation source as a line of heat on the tissue section on the slide holder.
17. The apparatus of embodiment 16, wherein the heat source further comprises an absorber positioned to absorb direct radiation and prevent direct radiation from reaching the tissue section.
18. The apparatus of any of embodiments 12 to 17, further comprising a microtome comprising a knife adapted to slice the tissue section from a sample; and a tissue collector adapted for collecting the tissue section and for movement between the microtome and the slide holder, wherein a collecting end of the tissue collector is adapted for holding an adhesive material.
19. The apparatus of embodiment 18, wherein the adhesive material is an adhesive strip, and the apparatus further comprises an adhesive strip dispenser within range of movement of the collecting end of the tissue collector.
20. The apparatus of any of embodiments 12 to 19, further comprising a controller configured to automate movement and/or operation of the slide holder.

The foregoing description of exemplary or preferred embodiments should be taken as illustrating, rather than as limiting the present invention as defined by the exemplary embodiments. As will be readily appreciated, numerous combinations of the features set forth above can be utilized without departing from the present invention as set forth in the embodiments. All such combinations of features are intended to be disclosed herein.

Further exemplary embodiments provided in accordance with the disclosed matter include, but are not limited to, the following:
A. A method of collecting and transferring a tissue section sliced from a sample, the method comprising:
   introducing a tissue section to a bath;
   applying a line of heat to the tissue section while withdrawing from the slide bath.
B. The method of item A, wherein the bath is at a temperature of less than 40°C.
C. The method of item A or B, wherein a portion of the tissue section is attached to the slide by an adhesive material.
D. The method of any one of items A to C, wherein the tissue section is attached to a slide before entering the slide bath.
E. The method of any one of items A to D, further comprising attaching a leading portion of the tissue section to a slide before, during, or after the tissue section is placed in the bath, and floating a trailing portion of the tissue section on a surface of the bath.
F. The method of item E, wherein the trailing portion is spread onto the slide as the leading portion is withdrawn from the tissue bath.
G. The method of item E or F, wherein the leading portion is withdrawn from the tissue bath at a predetermined rate.
H. The method of any one of items A to G, wherein the slide enters and/or exits the slide bath at an angle between 10° and 100° with a surface of liquid held in the slide bath.
I. An automated method for slicing a tissue section from a sample, comprising:
   slicing a tissue section from a tissue sample;
   adhering the tissue section to an adhesive material;
   attaching the adhesive material to a slide so that a first portion of the tissue section is adhered to the slide and a second portion of the tissue section is not adhered to the slide;
   introducing the slide and the tissue section to a bath;
   floating the second portion of the tissue section in the bath; and
   withdrawing the slide and the adhered tissue section from the bath so as to spread the adhered tissue section on the slide.
J. The method of item I, wherein the bath is at a temperature less than 40°C.
K. The method of item I or J, further comprising applying heat to the tissue section while withdrawing from the bath.
L. An apparatus for transferring a tissue section onto a slide, comprising:
   a slide holder adapted for holding and moving a slide;
   a bath container within range of movement of the slide holder, wherein the slide holder is adapted for introducing a tissue section adhered to the slide to a bath in the bath container;
   a heat source configured and positioned with respect to the slide holder and bath container to provide heat on the tissue section as it is withdrawn from the bath.
M. The apparatus of item L, wherein the heat source is adapted to provide a line of heat on the tissue section.
N. The apparatus of item L or M, wherein the heat source comprises a resistive heat source.
O. The apparatus of L or M, wherein the heat source comprises a light radiation source.
P. The apparatus of item O, wherein the heat source further comprises a reflector positioned to reflect radiation from the light radiation source as a line of heat on the tissue section on the slide holder.
Q. The apparatus of item P, wherein the heat source further comprises an absorber positioned to absorb direct radiation and prevent direct radiation from reaching the tissue section.
R. The apparatus of any one of items L to Q, further comprising a microtome comprising a knife adapted to slice the tissue section from a sample; and a tissue collector adapted for collecting the tissue section and for movement between the microtome and the slide holder, wherein a collecting end of the tissue collector is adapted for holding an adhesive material.
S. The apparatus of item R, wherein the adhesive material is an adhesive strip, and the apparatus further comprises an adhesive strip dispenser within range of movement of the collecting end of the tissue collector.
T. The apparatus of any one of items L to S, further comprising a controller configured to automate movement and/or operation of the slide holder.

## Claims

1. A method of collecting and transferring a tissue section sliced from a sample, the method comprising:
introducing a tissue section to a bath;
applying a line of heat to the tissue section while withdrawing from the slide bath.

2. The method of claim 1, wherein the bath is at a temperature of less than 40°C.

3. The method of claim 1 or 2, wherein a portion of the tissue section is attached to the slide by an adhesive material.

4. The method of any one of claims 1 to 3, further comprising attaching a leading portion of the tissue section to a slide before, during, or after the tissue section is placed in the bath, and floating a trailing portion of the tissue section on a surface of the bath.

5. The method of claim 4, wherein the trailing portion is spread onto the slide as the leading portion is withdrawn from the tissue bath.

6. The method of claim 5, wherein the leading portion is withdrawn from the tissue bath at a predetermined rate.

7. The method of any one of claims 1 to 6, wherein the slide enters and/or exits the slide bath at an angle between 10° and 100° with a surface of liquid held in the slide bath.

8. An apparatus for transferring a tissue section onto a slide, comprising:
a slide holder adapted for holding and moving a slide;
a bath container within range of movement of the slide holder, wherein the slide holder is adapted for introducing a tissue section adhered to the slide to a bath in the bath container;
a heat source configured and positioned with respect to the slide holder and bath container to provide heat on the tissue section as it is withdrawn from the bath.

9. The apparatus of claim 8, wherein the heat source is adapted to provide a line of heat on the tissue section.

10. The apparatus of claim 8 or 9, wherein the heat source comprises a resistive heat source.

11. The apparatus of claim 8 or 9, wherein the heat source comprises a light radiation source.

12. The apparatus of claim 11, wherein the heat source further comprises a reflector positioned to reflect radiation from the light radiation source as a line of heat on the tissue section on the slide holder.

13. The apparatus of any one of claims 8 to 12, further comprising a microtome comprising a knife adapted to slice the tissue section from a sample; and a tissue collector adapted for collecting the tissue section and for movement between the microtome and the slide holder, wherein a collecting end of the tissue collector is adapted for holding an adhesive material.

14. The apparatus of claim 13, wherein the adhesive material is an adhesive strip, and the apparatus further comprises an adhesive strip dispenser within range of movement of the collecting end of the tissue collector.

15. The apparatus of any one of claims 8 to 14, further comprising a controller configured to automate movement and/or operation of the slide holder.
